# EUROPÄISCHE PATENTSCHRIFT

(11) **EP 0 458 805 B1**
(45) Veröffentlichungstag und Bekanntmachung des Hinweises auf die Patenterteilung: **03.05.1995**
(21) Anmeldenummer: 90902249.3
(22) Anmeldetag: 03.02.1990
(51) Int. Cl.: A47J 36/06, A47J 45/06, A47J 45/07

(54) **KOCHGEFÄSS**
COOKING RECEPTACLE
RECIPIENT DE CUISSON

(30) Priorität: 18.02.1989 DE 3905002
(43) Veröffentlichungstag der Anmeldung: 04.12.1991
(73) Patentinhaber: FISSLER GMBH, D-55715 Idar-Oberstein (DE)
(72) Erfinder: THELEN, Arnold, D-6580 Idar-Oberstein (DE); GERLACH, Thomas, D-7271 Egenhausen (DE)
(74) Vertreter: Keil, Rainer A., Dipl.-Phys. Dr.
(86) Internationale Anmeldenummer: EP9000187
(87) Internationale Veröffentlichungsnummer: WO9009133

(56) Entgegenhaltungen:
- BE-A- 552 908
- CH-A- 309 501
- DE-A- 1 753 111
- DE-A- 2 001 195
- FR-A- 2 410 165
- FR-A- 2 527 918
- GB-A- 1 241 345
- US-A- 1 354 085
- US-A- 1 994 576

## Beschreibung

Die Erfindung bezieht sich auf ein Kochgefäß zur Aufnahme von Kochgut mit einem am Gefäßkörper umlaufenden nach außen abgewinkelten, im wesentlichen ebenen Schüttrand, wenigstens einem an der Gefäßwandung befestigten Gefäßgriff aus wärmeisolierendem Material, wie Kunststoff sowie mit einem auf den Schüttrand mit einem im wesentlichen ebenen Deckelrand schließend aufsetzbaren Deckel mit wenigstens einem Deckelgriff, wobei der Gefäßkörper und der Deckel eine Ausschütt- und/oder Lüftungseinrichtung bilden.

Bei bekannten beim Kochen oder Garen von Kochgut verwendeten Kochgefäßen ist eine Lüftungseinrichtung z.B. dadurch realisiert, daß der Deckel nicht schließend auf den Gefäßkörper aufgesetzt, sondern in einer von der Bedienungsperson willkürlich gewählten und nicht definierten gekippten Stellung nur teilweise auf dem die Gefäßöffnung umgebenden Gefäßrand angeordnet wird. Dies hat den Nachteil, daß in Abhängigkeit von der Kippstellung des Deckels auf dem Gefäßkörper das Kochgut nicht mehr oder zu stark weiterkocht. Hierdurch kann sich die Kochzeit ungewollt erhöhen oder die Kochflüssigkeit wegen zu hoher Temperatur überkochen und aus dem Kochgefäß austreten.

Im Anschluß an den Kochvorgang soll häufig die restliche Kochflüssigkeit aus dem Kochgefäß abgegossen werden, z.B. nach dem Kochen von Kartoffeln oder Gemüse. Dazu wird bisher ebenfalls der Deckel gegenüber dem Kochgefäß von der Bedienungsperson derart versetzt zum Rand der Gefäßöffnung bzw. gekippt angeordnet, daß eine Ausschüttöffnung entsteht. Allerdings kommt es häufig vor, daß die Ausschüttöffnung zu groß für das Kochgut gewählt wurde, so daß dieses beim Ausschütten aus dem Kochgefäß herausfällt oder daß die Kochflüssigkeit zu langsam abläuft. Weiterhin kann es auch vorkommen, daß der Deckel ganz von dem die Gefäßöffnung umgebenden Gefäßrand abrutscht und das gesamte heiße Kochgut plötzlich aus dem Gefäßinneren fällt. Ein weiterer Nachteil des bekannten Kochgefäßes liegt darin, daß zum Abschütten der Kochflüssigkeit der Deckel per Hand von der Bedienungsperson am Gefäßrand festgehalten werden muß. Da Kochgefäß und Deckel beim Kochen im allgemeinen heiß werden, besteht die Gefahr von Verbrennungen beim Abgießen der Kochflüssigkeit. Selbst bei Verwendung von Topflappen muß das Abgießen sehr schnell geschehen, da einerseits die Wärme über die Topflappen auf die Hand der Bedienungsperson übertragen wird, andererseits undefiniert Dampf aus dem Öffnungsbereich des Kochgefäßes austritt.

Aus der DE 33 09 534 A1 ist ein Gerät zum Koche, Servieren und Aufbewahren von Lebensmitteln o. dgl. bekannt, welches aus einem Gefäß mit einer offenen Mündung, einem auf das Gefäß abnehmbar aufsetzbaren Deckel zum Verschließen der offenen Mündung, der eine darin ausgebildete Öffnung aufweist, und aus einer Einrichtung zum Verschließen der Öffnung besteht, wenn der Deckel eine vorbestimmte Schließstellung auf der offenen Mündung des Gefäßes einnimmt. Der mittige Deckelgriff ist einstückig mit dem Deckel und die Gefäßgriffe sind in erheblichem Abstand davon als verbreiterte Abschnitte eines die offene Mündung umgebenden Kragens ausgebildet. Hierdurch nehmen sie bei Verwendung des Gerätes zum Kochen eine unerwünscht hohe Temperatur an. In einem Kragen des Deckels ist eine Öffnung vorgesehen, um den Stiel eines Küchengerätes, wie eines Löffels oder Küchenthermometers aufnehmen zu können. Der Deckel kann so auf dem Gefäß positioniert werden, daß die Öffnung verschlossen ist oder daß bei aufgesetztem Deckel ein Küchengerät in das Innere des Gefäßes eingeführt werden kann. Durch die Öffnung kann auch Dampf aus dem Inneren des Geschirrs entweichen. Zum Abschütten von Kochflüssigkeit ist die Öffnung weder bestimmt noch geeignet.

Aus der DE 1 734 787 U1 ist ein Kochtopf mit Deckel bekannt. Der Deckel hat einen nach unten gerichteten Rand, welcher in die obere Öffnung des Topfes paßt. In dem nach unten gerichteten Rand des Deckels sind nebeneinander in einer Ebene verlaufende Löcher vorgesehen, die zum geregelten Ausgießen der Kochflüssigkeit aus dem Kochtopf dienen. In dem außen liegenden Rand des Kochtopfes ist eine Ausgußtülle eingedrückt, so daß die durch die Löcher auszugießende Kochflüssigkeit nach der Seite hin ablaufen kann, ohne die Außenwand des Kochtopfes zu verschmutzen. Der Deckel kann in eine solche Winkellage gedreht werden, daß die Löcher von dem äußeren Topfrand verschlossen werden. Der Deckel ist mit einem mittigen Deckelknopf und der Kochtopf mit zwei einander gegenüberliegenden Henkelgriffen versehen. Bei einer derartigen Ausbildung muß beim Abgießen der Kochflüssigkeit durch Kippen des Topfes der Deckel mit den Händen festgehalten werden, wodurch Verbrennungsgefahr besteht. Außerdem verläuft die Fuge zwischen Deckelrand und Topfrand vertikal, so daß der austretende Dampf unmittelbar die Hand trifft, welche den Deckel beim Festhalten übergreift. Bei Verformung des nach unten gerichteten Deckelrandes und/oder des nach oben gerichteten Topfrandes ist der Deckel nur noch schwierig auf den Topf aufzusetzen. Sollen die Öffnungen im Deckelrand die für ein Abgießen richtige Größe haben, so muß der senkrecht nach unten weisende Deckelrand verhältnismäßig breit sein, was die Verformbarkeit des Deckelrandes und den Materialbedarf noch weiter erhöht. Ferner ist bei diesem bekannten Kochtopf vor oben nur schwierig zu sehen, in welcher Winkelposition sich der Deckel zum Topf befindet.

Aus der CH 309 501 C1 ist ein Kochtopf mit Deckel für Haushaltszwecke bekannt, bei welchem zwischen Deckel und seiner Auflagefläche Spalten gebildet sind, um den Austritt des Dampfes beim Kochen und das Ausgießen von Wasser o.dgl. bei aufgesetztem Deckel zu ermöglichen. Die Spalten können durch Einpressungen in der Auflagefläche für den Deckel oder durch Einpressungen des Deckelrandes selbst gebildet sein. Hierbei ist ein völliges Verschließen des Kochtopfes überhaupt nicht möglich. Auch hier muß beim Abgießen der Kochflüssigkeit der Deckel unmittelbar mit dem Daumen der Hand selbst gehalten werden.

Aufgabe der Erfindung ist es, ein Kochgefäß der eingangs genannten Art zu schaffen, mit dem ein definiertes Lüften aber auch ein vollständiges Schließen des Kochgefäßes während des Kochvorganges und ein einfaches, sicheres und ebenfalls definiertes Ausgießen der Kochflüssigkeit möglich ist.

Diese Aufgabe wird erfindungsgemäß dadurch gelöst, daß die Gefäßwandung in wenigstens einem Umfangsbereich ihres oberen Randabschnittes unter Verkürzung des Schüttrandes eine größere Schräge als im übrigen Umfangsbereich aufweist und daß der Deckelrand in wenigstens einem Umfangsabschnitt wenigstens eine bei entsprechender Deckeldrehstellung in radialer Richtung in den von der größeren Schräge freigegebenen Austrittsöffnungsbereich ragende Aufwölbung aufweist, daß der übrige ohne größere Schräge ausgestattete Umfangsbereich der Gefäßwandung eine mindestens so große zusammenhängende Umfangslänge aufweist, wie der die wenigstens eine Aufwölbung aufweisende Umfangsabschnitt des Deckels, daß die Gefaßwandung in wenigstens einem Umfangsbereich ihres oberen Randabschnittes unter Verkürzung des Schüttrandes eine größere Schräge als im übrigen Umfangsbereich aufweist, daß der Deckelrand in wenigstens einem Umfangsabschnitt wenigstens eine bei entsprechender Deckeldrehstellung in radialer Richtung in den von der größeren Schräge freigegebenen Austrittsöffnungsbereich ragende Aufwölbung aufweist, daß der übrige ohne größere Schräge ausgestattete Umfangsbereich der Gefäßwandung eine mindestens so große zusammenhängende Umfangslänge aufweist, wie der die wenigstens eine Aufwölbung aufweisende umfangsabschnitt des Deckels, daß der mindestens eine Gefäßgriff um im wesentlichen 90° versetzt zur radialen Mittellinie des die größere Schräge aufweisenden Umfangsbereiches der Gefäßwandung an derselben angeordnet ist, daß der Deckelgriff sich über den Deckel erstreckend ausgebildet ist und seine Längserstreckung um einen Winkel von etwa 90° versetzt zur radialen Mittellinie des die Abschüttaufwölbung aufweisenden Umfangsabschnittes des Deckelrandes derart angeordnet ist, daß in Öffnungsdrehstellung des Deckels relativ zu dem Gefäßkörper der Deckelgriff und der wenigstens eine Gefäßgriff zueinander ausgerichtet sind und daß in Schließdrehstellung des Deckels relativ zu dem Gefäßkörper der Deckelgriff um einen Winkel von etwa 90° versetzt zu dem wenigstens einen Gefäßgriff liegt.

Mit der Erfindung ist ein Kochgefäß geschaffen, bei dem durch einfache Drehung des Deckels relativ zum Gefäßkörper eine stufenlose Verstellung einer Ausschütt- und/oder Lüftungsöffnung erreicht werden kann, wobei die gewünschte Ausschütt- und/oder Lüftungsöffnung in ihrer Größe genau definiert und von der Bedienungsperson je nach Kochgut und Kochflüssigkeit entsprechend eingestellt werden kann. Durch die größere Schräge und die Aufwölbung entsteht ein Bereich mit einer definierten Ausschüttöffnung, wodurch ein definiertes Ausgießen bzw. Abschütten der Kochflüssigkeit erreicht wird. Durch die Aufwölbungen werden definierte Kanäle gebildet, welche durch das feste Gargut beim Abschütten der Kochflüssigkeit blockiert werden und dadurch weiteres Gargut zurückgehalten wird. Kochflüssigkeit kann einfach ohne die Gefahr, daß sich die Bedienungsperson beim Ausschütten der Kochflüssigkeit verbrüht, abgegossen werden. Aufgrund der länglichen Ausbildung und der Längserstreckung versetzt um einen Winkel von vorzugsweise etwa 90° zur radialen Mittellinie kann jede beliebige Lüftungsstellung ebenso wie die Ausschüttstellung von der Bedienungsperson ohne weiteres eingestellt und sofort erkannt werden. Dadurch daß in Öffnungsdrehstellung des Deckels relativ zu dem Gefäßkörper der Deckelgriff und der wenigstens eine Gefäßgriff zueinander ausgerichtet sind, sind Deckel und Gefäßkörper einfach ohne Verbrennungsgefahr gemeinsam handhabbar. Die Schließstellung des Deckels ist wegen der versetzten Lage von Gefäßgriffen und Topfgriff für den Benutzer deutlich erkennbar, was die Sicherheit noch weiter erhöht.

In einer vorteilhaften Ausgestaltung der Erfindung hat der mit der größeren Schräge ausgestattete Umfangsbereich der Gefäßwandung eine größere Umfangslänge als der die wenigstens eine Aufwölbung aufweisende Umfangsabschnitt des Deckels.

Als besonders günstig hat es sich dabei herausgestellt, daß der mit der größeren Schräge ausgestattete Umfangsbereich der Gefäßwandung eine Umfangslänge von etwa 120° einnimmt, während der die wenigstens eine Aufwölbung aufweisende Umfangsabschnitt des Deckels eine Umfangslänge von etwa 60° einnimmt.

Eine hinreichend große Schütt- und Luftungsöffnung bei in Öffnungsdrehstellung aufgesetztem Deckel und ein einfaches und definiertes Ausgießen der Kochflüssigkeit auch ohne Deckel werden dadurch erreicht, daß die größere Schräge um zwischen 20 und 40°, vorzugsweise um etwa 30° zur Gefäßachse geneigt ist.

Aus handhabungstechnischen Gründen hat es sich als besonders vorteilhaft erwiesen, daß die Gefäßwandung in zwei im wesentlichen sich gegenüberliegenden Umfangsbereichen ihres oberen Randabschnittes eine größere Schräge aufweist als im übrigen Umfangsbereich. Mit einem derartigen Kochgefäß kann somit nicht nur in einer, sondern in zwei Positionen geschüttet und gelüftet werden, was z.B. bei Gefäßen mit einem (einzigen) Stielgriff für Rechts- und Linkshandbedienung von Bedeutung ist.

Zum Entlüften beim Abschütten der Kochflüssigkeit ist es ferner vorteilhaft, daß der Deckel wenigstens eine Entlüftungsöffnung aufweist, die ebenfalls von einer Aufwölbung des Deckelrandes ausgebildet ist und daher in einem Herstellungsvorgang wie die Abschüttaufwölbung hergestellt werden kann.

Zweckmäßigerweise ist die Entlüftungsaufwölbung in einem dem die Abschüttaufwölbung gegenüberliegenden Umfangsabschnitt des Deckelrandes vorgesehen, damit die Entlüftungsöffnung nicht vom Abschüttvorgang beeinträchtigt wird.

Zweckmäßigerweise ist die radiale Erstreckung der Abschnittaufwölbung und der Entlüftungsaufwölbung geringer als die Breite des Deckelrandes in dem ohne größere Schräge ausgestatteten Umfangsbereich der Gefäßwandung. Auf diese Weise ist mit einfachen Mitteln gewährleistet, daß eine Abschütt- und Lüftungsfunktion nur in einem Bereich erfolgen kann, in dem der Umfangsabschnitt des Deckels und der Umfangsbereich des Kochgefäßes zur Deckung gelangen und in anderer Drehstellung des Deckels dessen (vollständige) Schließfunktion gewährleistet ist.

Die radiale Erstreckung der Entlüftungsaufwölbung ist aus den obengenannten Gründen ebenfalls geringer als die Breite des Deckelrandes. Auf diese Weise ist gewährleistet, daß die Entlüftungsaufwölbung nur beim Ausschütten bzw. teilweise beim Lüften zur Wirkung kommt, da sie in diesem Falle oberhalb eines Umfangsbereiches der Gefäßwandung mit der größeren Schräge angeordnet ist, während in Schließstellung des Deckels ein vollständiges Schließen gewährleistet ist.

Zweckmäßigerweise ist die Umfangslänge der Entlüftungsaufwölbung wesentlich geringer als diejenige des die Abschüttaufwölbung aufweisenden Umfangsabschnittes, da eine geringe Umfangslänge der Entlüftungsaufwölbung zum Entlüften beim Abschütten ausreichend ist. Die Lüftungsfunktion beim Kochen und Garen wird im wesentlichen von dem die Abschüttaufwölbung und die größere Schräge aufweisenden Umfangsbereich der Gefäßwandung und -abschnitt des Deckelrandes übernommen wird.

In einer weiteren besonders vorteilhaften Ausgestaltung der Erfindung ist die Abschüttaufwölbung in mehrere, vorzugsweise drei Ausbuchtungen unterteilt. Diese Ausbuchtungen bewirken eine Art Siebfunktion, so daß beim Abgießen der Kochflüssigkeit selbst kleineres Kochgut im Kochgefäß zurückgehalten wird.

Ein definierter Schüttbereich des Kochgefäßes wird in einfacher Weise dadurch erreicht, daß der die größere Schräge aufweisende Umfangsbereich der Gefäßwandung in Richtung der Gefäßkörperachse gesehen, eine im wesentlichen sichelförmige Gestalt hat.

Durch die Kombination wenigstens eines unmittelbar unterhalb des Schüttrandes befestigten Gefäßgriffes und wenigstens eines sich über einen wesentlichen Teil des Durchmessers des Deckels erstreckenden Topfgriffes wird ein handhabungssicheres System von Topfgefäß und Deckel geschaffen, mit dem es dem Benutzer ermöglicht wird, in einfacher Weise Kochflüssigkeit aus dem Kochgefäß abzugießen, ohne sich am Deckel zu verbrennen oder durch die Kochflüssigkeit zu verbrühen. Durch die Anordnung der Gefäßgriffe unmittelbar unterhalb des Schüttrandes und die erhebliche Länge des Deckelgriffs ist die Entfernung zwischen Gefäßgriff und Deckelgriff so gering, daß der Benutzer das Kochgefäß beim Ergreifen eines Gefäßgriffes einfach mit dem Damen der Hand auf den Griff des aufgesetzten Deckels drücken und diesen damit festhalten kann, ohne die Deckeloberfläche berühren zu müssen. Selbst bei Verwendung nur eines Gefäßgriffs, bspw. in Form eines länglichen Stiels, kann der Deckel so mit nur einer Hand sicher und einfach auf dem Kochgefäß gehalten werden.

Günstigerweise ist der Deckelgriff als vorzugsweise leicht gewölbter Bügel mit - abgesehen von seinen Befestigungsenden - Abstand von der Oberseite des Deckels verlaufend ausgebildet. Die leichte Wölbung ist derart ausgebildet, daß es dem Benutzer zwar unmöglich ist, unter den Bügel zu greifen und sich an der heißen Deckeloberfläche zu verbrennen, andererseits hat der Bügel aber einen hinreichenden Abstand, so daß er eine niedrigere Temperatur als der Deckel behält.

In einer besonders einfachen und vorteilhaften Ausgestaltung ist vorgesehen, daß der Deckelgriff mittels einer Steck-Schnapp-Verbindung befestigt ist.

Die Steck-Schnapp-Verbindung wird in einfacher Weise durch ein als Federclip ausgebildetes Federelement und durch von mindestens einem Arretierungsvorsprung und in den Befestigungsenden vorgesehenen Ausnehmungen gebildet. Ein solcher Federclip bietet den Vorteil, daß fertigungsbedingte Toleranzen und Wärmeausdehnung des Deckelgriffs ausgeglichen werden.

Das Federelement kann in einfacher Weise auf den Deckel genietet oder geschweißt sein, wobei die Punktverschweißung die einfachste und schnellste Möglichkeit der Befestigung darstellt und die Griffbefestigung auch vom Deckelinneren aus unsichtbar macht.

Im Bereich der Steck-Schnapp-Verbindung sind günstigerweise zusätzliche Aussparungen in den Befestigungsenden des Deckelgriffs angeordnet. Diese Aussparungen dienen der Kühlung der Befestigungsenden des Deckelsgriffs, da nur an den Befestigungsenden ein direkter Wärmeübergang zwischen Topfdeckel und Deckelgriff möglich ist.

Eine weitere mögliche Ausgestaltung der Erfindung sieht vor, daß der Deckelgriff mit dem Deckel verklebt ist.

Da der wenigstens eine Gefäßgriff direkt unterhalb der Unterkante des Schüttrandes angeordnet ist, ist es für seine Befestigung und seinen unverdrehbaren Sitz günstig, daß der Gefäßgriff eine an die Gefäßwandung und die Unterkante des Schüttrandes angepaßte Anlagefläche aufweist.

Vorteilhafterweise ist zwischen der Anlagefläche und der Gefäßwandung und/oder der Unterkante des Schüttrandes eine Dichtung angeordnet, die verhindert, daß bei Überkochen des Kochgutes Kochflüssigkeit zwischen Unterkante des Schüttrandes bzw. Gefäßwandung und Gefäßgriff gelangt und sich dort ablagert. Dazu ist es sehr vorteilhaft, daß die Dichtung in eine Nut des Gefäßgriffes eingepaßt ist.

In einer weiteren besonders vorteilhaften Ausgestaltung der Erfindung ist vorgesehen, daß der Gefäßgriff mittels einer (einzigen) Schraube unter etwa 45° zur Gefäßwandung mit dieser verschraubt ist. Durch diese Verschraubung wird der Griff in einfacher Weise in die durch den Schüttrand und die Gefäßwandung gebildete Ecke gespannt.

Vorteilhafterweise ist die die (einzige) Schraube aufnehmende Durchbrechung des Gefäßgriffes etwa mittig im Gefäßgriff angeordnet. Durch diese mittige Verschraubung wird die Parallelität von Griff und Topf durch Selbstzentrierung gewährleistet, wodurch gleichzeitig ein ästetisches Aussehen der Kochgefäß-Gefäßgriff-Kombination gewährleistet ist.

Ein ansprechendes Aussehen des Kochgefäßes wird auch dadurch gefördert, daß der Außenumfangsrand des vorzugsweise vollflächigen Gefäßgriffes im wesentlichen parallel zur Gefäßwandung und die stirnseitigen Außenkanten des Gefäßgriffs im wesentlichen radial verlaufen.

Eine gute Griffigkeit der Griffelemente wird in einfacher Weise dadurch erreicht, daß der Deckelgriff jedenfalls im Bereich seiner Befestigungsenden und der wenigstens eine Gefäßgriff wenigstens auf seiner Oberfläche strukturiert sind.

Dazu sieht eine weitere vorteilhafte Ausgestaltung der Erfindung vor, daß die Oberflächenstrukturen als Rippen, Rillen, Noppen, Vertiefungen od. dgl. ausgebildet sind.

Durch die Ausbildung einer seitlichen Griffmulde im Griffbereich des Deckelgriffes ist dieser sehr einfach von einer Bedienungsperson teilweise zu untergreifen, ohne mit der heißen Deckeloberfläche in Berührung zu kommen.

Durch die Ausbildung der Griffmulde ist der Deckelgriff zu seinen Befestigungsenden hin verbreitert, was ein günstiges Aussehen bewirkt und breite Angriffsflächen für die Auflage der Daumen beim gleichzeitigen Ergreifen von Gefäßkörper und an Gefäßring und Deckelgriff Deckel bietet.

Weitere Ziele, Vorteile und Anwendungsmöglichkeiten der vorliegenden Erfindung ergeben sich aus der nachfolgenden Beschreibung von Ausführungsbeispielen anhand der beiliegenden Zeichnung.

Es zeigen:
- Fig. 1: das erfindungsgemäße Kochgefäß (Gefäßgriffe nur angedeutet) in Draufsicht,

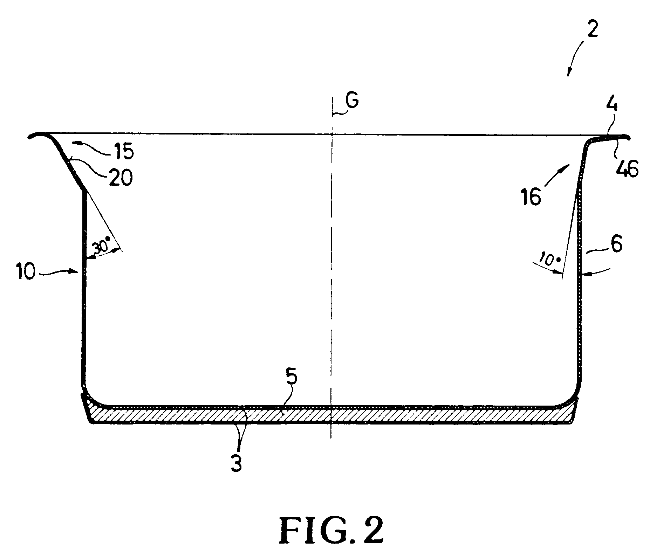

- Fig. 2: das Kochgefäß (ohne Gefäßgriffe) von Fig. 1 im Schnitt gemäß Schnittlinie II-II aus Fig. 1,
- Fig. 3: den erfindungsgemäßen Deckel (Deckelgriff nur angedeutet) in Draufsicht,
- Fig. 3a: die vergrößerte Darstellung einer Ausbuchtung gemäß Fig. 3 in Pfeilrichtung A gesehen,
- Fig. 3b: die vergrößerte Darstellung einer Entlüftungsaufwölbung, gemäß Fig. 3 in Pfeilrichtung B gesehen,
- Fig. 4: einen Schnitt des Deckels ohne Deckelgriff gemäß der Schnittlinie IV-IV aus Fig. 3,
- Fig. 5: einen Gefäßgriff in Draufsicht,
- Fig. 6: den Gefäßgriff im Schnitt gemäß der Schrittlinie VI-VI aus Fig. 5,

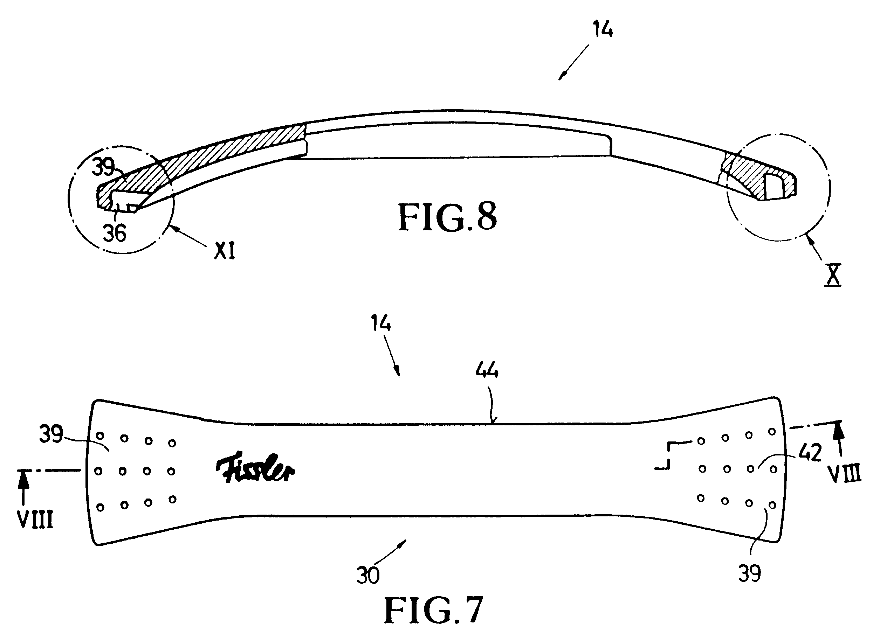

- Fig. 7: einen Deckelgriff in Draufsicht,
- Fig. 8: den Deckelgriff in Seitenansicht teilweise geschnitten gemäß der Schnittlinie VIII-VIII aus Fig. 7,

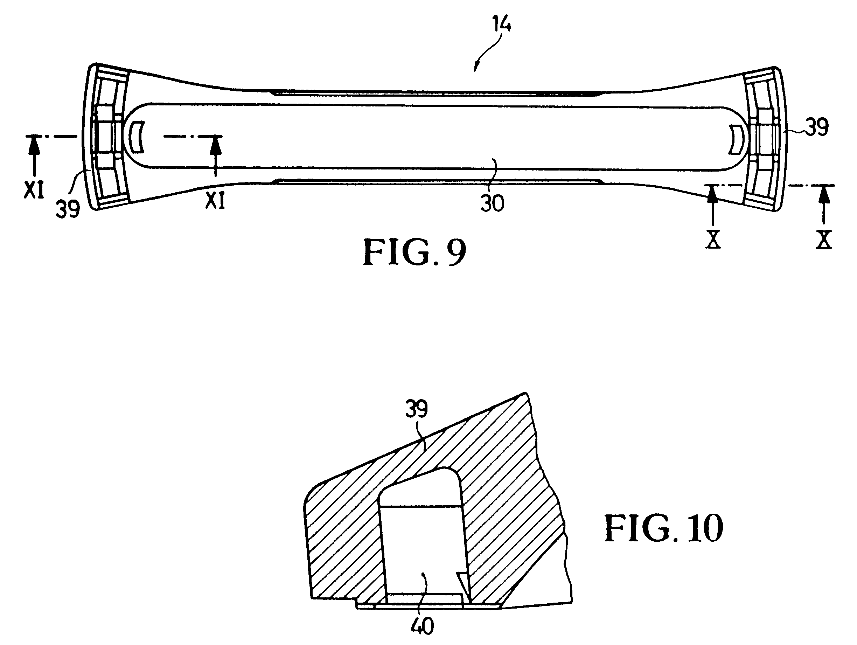

- Fig. 9: eine Ansicht auf die Unterseite des Deckelgriffes gemäß Fig. 7 und 8,
- Fig. 10: das Befestigungsende des Deckelgriffes in vergrößerter Darstellung im Schnitt gemäß der Schnittlinie X-X aus Fig. 9 sowie als Einzelheit X aus Fig. 8,
- Fig. 11a: eine Steck-Schnapp-Verbindung des Deckelgriffs am Deckelrand in gegenüber Fig. 8 vergrößerter Darstellung gemäß Einzelheit XI von Fig. 8 geschnitten gemäß Schnittlinie XI-XI in Fig. 9, und
- Fig. 11b: eine andere Art einer Steck-Schnapp-Verbindung in ähnlicher Darstellung wie Fig. 11a.

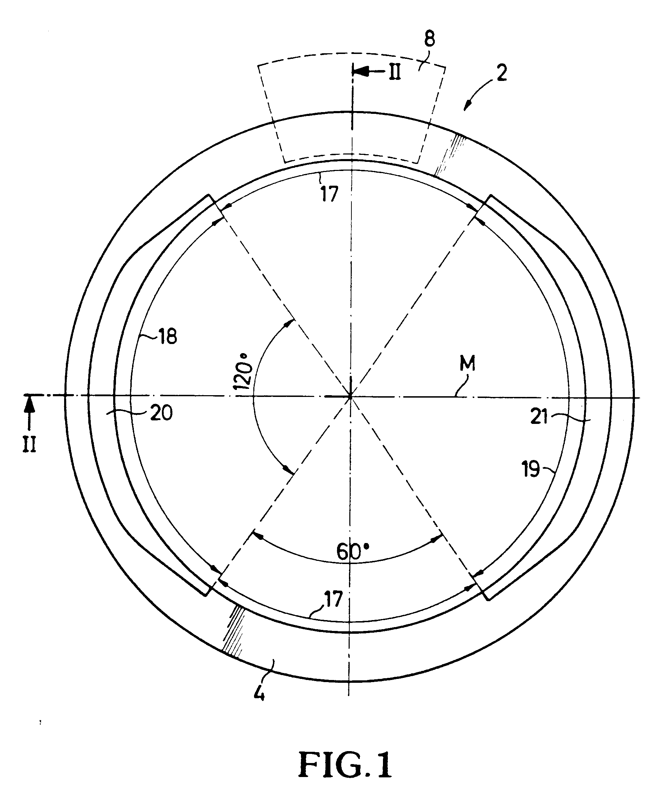

Das dargestellte erfindungsgemäße Kochgefäß 2 weist einen Gefäßkörper 10 mit einem umlaufenden nach außen abgewinkelten im wesentlichen ebenen Schüttrand 4 auf. An der Gefäßwandung 6 des Kochgefäßes 2 ist wenigstens ein Gefäßgriff 8 (gestrichelt in Fig. 1 oben dargestellt) aus Kunststoff befestigt. Vorzugsweise sind zwei z.B. als Henkelgriffe ausgebildete Gefäßgriffe 8 auf einander gegenüberliegenden Seiten außen an der Gefäßwandung 6 befestigt oder auch nur ein einzelner Gefäßgriff 8 z.B. in Stielform. Desweiteren hat das Kochgefäß 2 einen Kapselboden 3 mit einer Bodenplatte 5 aus hochwärmeleitfähigem Material, wie bspw. Aluminium.

Die Gefäßwandung 6 weist in zwei einander gegenüberliegenden Umfangsbereichen 18, 19 ihres oberen Randabschnittes größere Schrägen 20, 21 auf, wodurch der Schüttrand 4 in diesen Umfangsbereichen 18, 19 von innen her verkürzt ist. Es ist selbstverständlich, daß die Erfindung nicht auf zwei Umfangsbereiche 18, 19 beschränkt ist, sondern auch nur einen oder auch mehrere Umfangsbereiche aufweisen kann. Die Verschmälerung des Schüttrandes 4 in den Umfangsbereichen 18, 19 ändert nichts an dem kreisrunden Umfang bzw. der kreisrunden Form des Gefäßkörpers 10 und des Schüttrandes 4. Die größeren Schrägen 20, 21 sind in diesem Ausführungsbeispiel um etwa 30° zur Gefäßachse G geneigt, während der obere Randbereich 16 der Gefäßwandung 6 im übrigen Umfangsbereich 17 nur eine Schräge von 10° aufweist. Die Schrägen sind jedoch nicht auf die angegebenen Werte von 10° bzw. 30° begrenzt. Durch die größeren Schrägen 20, 21 wird jeweils eine Art Schütte gebildet, welche in einen Austrittsöffnungsbereich mündet und ein gerichtetes Ausgießes ermöglicht.

Die Umfangsbereiche 18, 19 haben im dargestellten Fall eine Umfangslänge von jeweils etwa 120°. Die zwischen den Umfangsbereichen 18, 19 liegenden Umfangsbereiche 17 haben somit jeweils eine Erstreckung von etwa 60°. Auch hier ist die Ausbildung der Umfangsbereiche 18, 19 nicht auf die angegebenen Werte beschränkt. Eine Verkleinerung oder Vergrößerung der jeweiligen Winkelmaße ist durchaus möglich. Wie aus Fig. 1 ersichtlich, weisen die Umfangsbereiche 18,19 mit den größeren Schrägen 20, 21 eine, in Richtung der Gefäßachse G gesehen, im wesentlichen sichelförmige Gestalt auf.

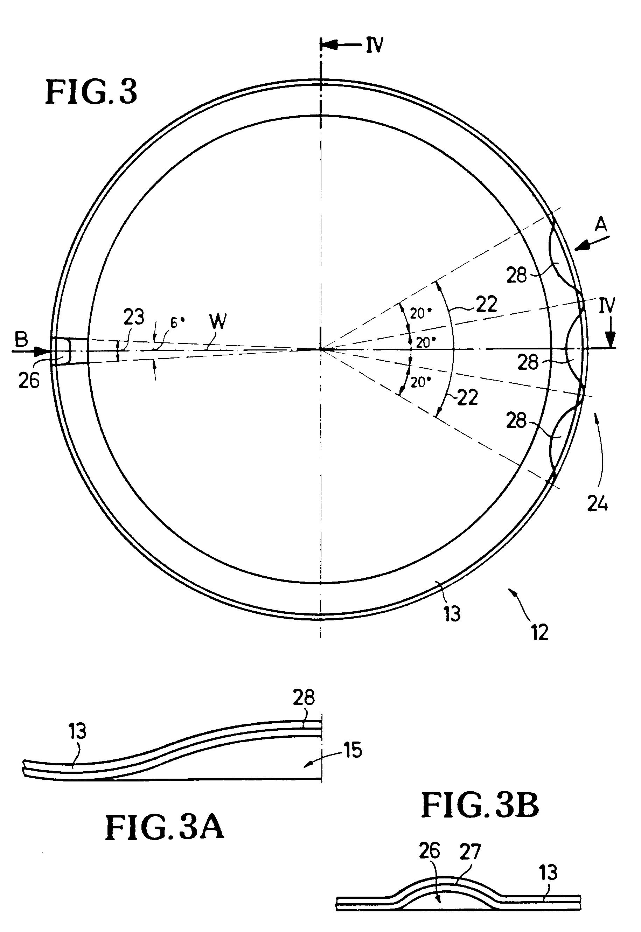

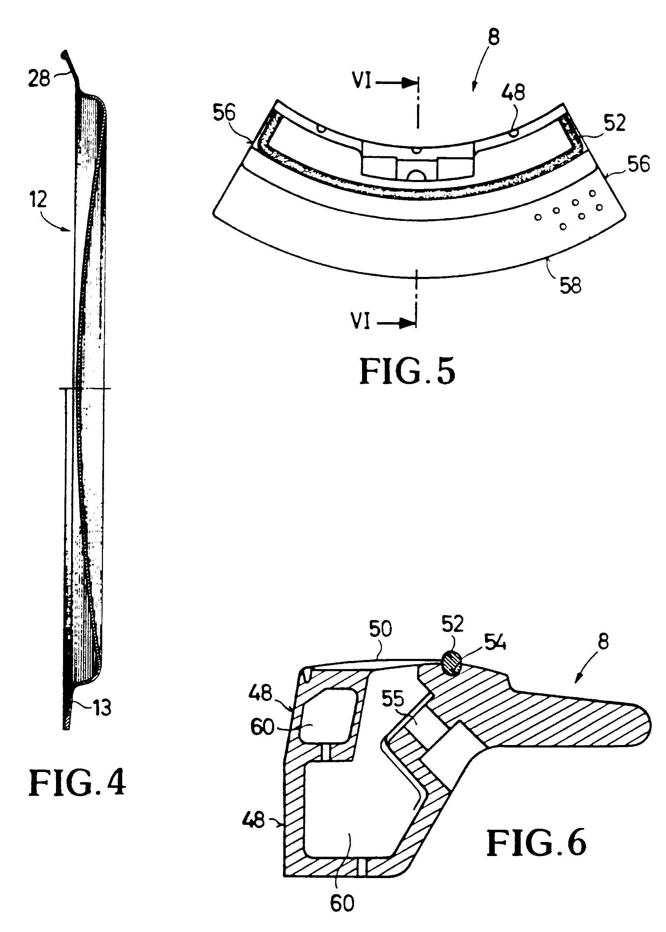

Der Deckel 12 hat einen nach außen abgewinkelten, im wesentlichen ebenen Deckelrand 13 und einen Deckelgriff 14. In einem Umfangsabschnitt 22 weist der Deckel 12 eine Abschüttaufwölbung 24 auf, deren radiale Erstreckung geringer ist als die Breite des Deckelrandes 13. Der Umfangsabschnitt 22 des Deckels 12 nimmt eine Umfangslänge von etwa 60° ein. Die Abschüttaufwölbung 24 ist in diesem Ausführungsbeispiel in drei kanalbildenden Ausbuchtungen 28 unterteilt, die jeweils ihrerseits eine Umfangslänge von jeweils etwa 20° einnehmen. Eine derartige Ausbuchtung 28 ist in vergrößerter Darstellung in Fig. 3A dargestellt. Der Randbereich des Deckels 12 weist im Anschluß an den Deckelrand 13 nach innen eine nach unten gebogene, umlaufende Randsicke auf, während der Spiegel des Deckels 12 leicht nach außen gewölbt ist (Fig. 4).

Am Deckelrand 13 ist weiterhin eine in Öffnungsdrehstellung des Deckels 12 eine Entlüftungsöffnung 26 freigebende Aufwölbung 27 vorgesehen, die sich in einem dem die Abschüttaufwölbung 24 aufweisenden Umfangsabschnitt 22 gegenüberliegenden Umfangsabschnitt 23 des Deckelrandes 13 befindet. Die Entlüftungsaufwölbung 27, die in Fig. 3b vergrößert dargestellt ist, hat eine wesentlich geringere Umfangserstreckung als der Umfangsabschnitt 22 des Deckels 12, nämlich nur etwa 6°. Die radiale Erstreckung der Abschüttaufwölbung 24 ist wie die radiale Erstreckung der Entlüftungsaufwölbung 27 geringer als die Breite des Deckelrandes 13. Mit Ausnahme der Abschüttaufwölbung 24 und der Entlüftungsaufwölbung 27 liegt der Deckelrand 13 auf dem Schüttrand 4 lose aber schließend auf.

Bei Überdeckung von Umfangsabschnitt 22 des Deckels 12 mit einem Umfangsbereich 18 oder 19 ragt die Abschüttaufwölbung 24 wie die Entlüftungsaufwölbung 27 in den Bereich der größeren Schräge 20. Auf diese Weise kann ein Lüften beim Kochen oder ein Ausgießen nach dem Kochen in den Bereichen, in denen die Umfangsbereiche 18 oder 19 und der Urfangsabschnitt 22 zur Deckung gelangen, vorgenommen werden. Um auch ein Verschließen des Kochgefäßes durch der Deckel 12 ohne Lüftungsfunktion zu erreichen ist gewährleistet, daß der ohne größere Schräge 20, 21 ausgestattete übrige Umfangsbereich 17 der Gefäßwandung 6 eine mindestens so große Umfangslänge aufweist, wie der die Abschüttaufwölbung 24 aufweisende Umfangsabschnitt 22 des Deckels 12. Wird der Deckel 12 derart gedreht, daß sich der die Abschüttaufwölbung 24 aufweisende Umfangsabschnitt 22 mit dem Umfangsabschnitt 17 ohne größere Schräge 20, 21 deckt, ist das Kochgefäß 2 verschlossen.

Der Gefäßgriff 8 ist bzw. die beiden Gefäßgriffe 8 sind in etwa um etwa 90° zur radialen Mittellinie M des die größere Schräge 20, 21 aufweisenden Umfangsbereiches 18, 19 der Gefäßwandung 6 an derselben versetzt angeordnet. Der Deckelgriff 14 ist länglich ausgebildet. Die Längserstreckung des Deckelgriffes 14 verläuft etwa um 90° zur radialen Mittellinie W des Umfangsabschnittes 22 versetzt, wie in Fig. 3 angedeutet. Daraus ergibt sich, daß in Öffnungsdrehstellung des Deckels 12 relativ zu dem Gefäßkörper 10 der Deckelgriff 14 und der Gefäßgriff 8 zueinander ausgerichtet sind. In Schließdrehstellung des Deckels 12 relativ zu dem Gefäßkörper 10 liegt der Deckelgriff 14 dagegen um etwa 90° versetzt zu dem Gefäßgriff 8 bzw. den Gefäßgriffen 8.

Der Deckelgriff 14 ist als leicht gewölbter Bügel ausgebildet, der sich bis auf seine Befestigungsenden 39 im Abstand von der Oberseite des Deckels 12 über den gesamten Durchmesser des Deckels 12 erstreckt. Der Deckelgriff 14 ist über die Befestigungsenden 39 mit dem Deckelrand 13 des Deckels 12 verbunden. In seinem Griffabschnitt 30 weist der Deckelgriff 14 beidseitig eine Griffmulde 44 auf, während er sich zu seinen Befestigungsenden 39 hin zur Bildung einer Daumenauflage verbreitert. Durch die gewölbte Ausgestaltung des Deckelgriffes 14 in Verbindung mit der nach außen gewölbten Deckeloberfläche ist die zwischen Deckel 12 und Deckelgriff 14 verbleibende Höhe nur so groß, daß der Benutzer nicht mit den Fingern zwischen Bügel und Deckeloberseite greifen kann, so daß die Verbrennungsgefahr verringert ist.

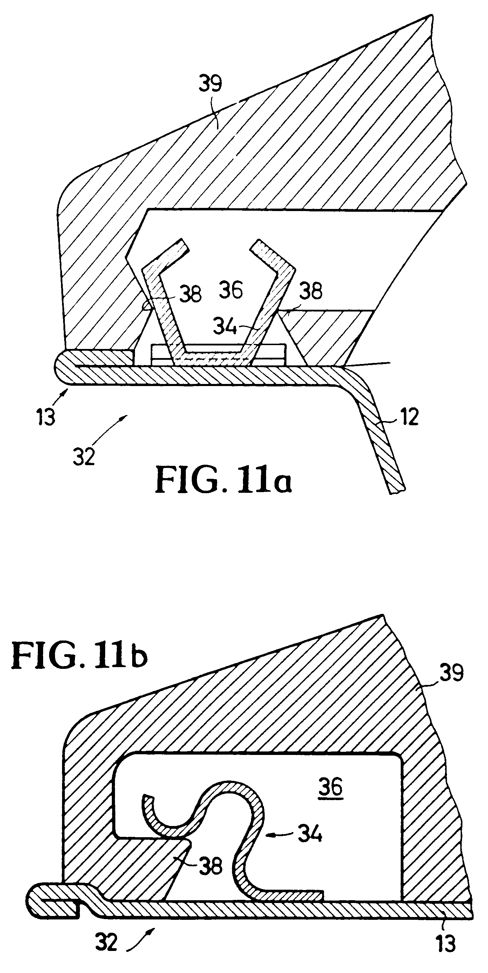

Es bestehen verschiedene Möglichkeiten, den Deckelgriff 14 am Deckel 12 zu befestigen. Neben einer Verklebung von Deckelgriff 14 mit Deckel 12, wobei in die Befestigungsenden 39 wahlweise ein Edelstahlplättchen eingespritzt sein kann, ist gemäß Fig. 11a und 11b auch eine unsichtbare Steck-Schnapp-Verbindung 32 möglich. Dazu weist der Deckelgriff 14 gemäß Fig. 11a an seinen beiden Enden 39 Ausnehmungen 36 auf, welche von Arretierungsvorsprüngen 38 begrenzt sind. Auf dem Deckelrand 13 ist ein Federelement 34 befestigt, das in diesem Ausführungsbeispiel als doppelseitiger Federclip ausgeführt ist. Der Federclip hintergreift die Arretierungsvorsprünge 38 und bewirkt so ein Festspannen des Deckelgriffes 14 mit dem Deckel 12. Der Deckelrand 13 ist zur Verstärkung nach oben umgebördelt, was gleichzeitig ein optisch ansprechendes Aussehen bewirkt. Diese durch die Umbördelung hervorgerufene Erhöhung des äußeren Deckelrandbereiches wird durch eine entsprechende Aussparung an den Befestigungsenden 39 des Deckelgriffes 14 ausgeglichen. Bei dem Ausführungsbeispiel nach Fig. 11b übergreift eine als gekrümmte Federklemme ausgebildetes Federelement 34 einen einzigen äußeren Arretierungsvorsprung.

Im Bereich der Steck-Schnapp-Verbindung 32 sind zusätzlich seitliche Aussparungen 40 in den Befestigungsenden 39 des Deckelgriffes 14 vorgesehen. Diese dienen einer Verringerung der Wärmeübertragung, so daß der Deckelgriff 14 auch von den Enden her weniger heiß wird.

Der in den Fig. 5 und 6 dargestellte Gefäßgriff 8 werden unmittelbar unterhalb des Schüttrandes 4 mit der Gefäßwandung 6 des Kochgefäßes 2 verbunden. Der Gefäßgriff 8 besitzt der Gefäßwandung 6 und der Unterkante 46 des Schüttrandes 4 angepaßte Anlageflächen 48, 50. Zwischen diesen Anlagefläche 48, 50 und der Gefäßwandung 6 und/oder der Unterkante 46 des Schüttrandes 4 ist mindestens eine Dichtung 52 angeordnet. Die Dichtung 52 ist in eine Nut 54 des Gefäßgriffes 8 eingepaßt. Etwa in der Mitte des Gefäßgriffes 8 befindet sich eine Durchbrechung 55, in der eine (nicht dargestellte) einzige Befestigungsschraube aufnehmbar ist. Mittels der Befestigungsschraube wird der Gefäßgriff 8 unter etwa 45° zur Gefäßwandung 6 verschraubt. Zur Verringerung der Wärmeübertragung und Kühlung des Gefäßgriffes 8 sind im Gefäßgriff 8 mehrere Kammern 60 vorgesehen. Um Ansammlungen von Flüssigkeit, die bspw. beim Reinigen eindringen kann, in den Kammern 60 zu vermeiden, sind mit Ablaufbohrungen versehen.

Der gekrümmte Außenumfangsrand 58 des von oben gesehen großflächig ausgebildeten Gefäßgriffes 8 verläuft in etwa parallel zur Gefäßwandung 6, während die stirnseitigen Außenkanten 56 des Gefäßgriffes 8 etwa radial verlaufen. Dadurch wird eine sichere Griffläche geboten.

Der Gefäßgriff 8 und der Deckelgriff 14 weisen an ihrer Oberfläche Oberflächenstrukturen 42 zur Greifsicherung auf. Diese Oberflächenstrukturen 42, die beim Deckelgriff 14 vorzugsweise im Bereich seiner Befestigungsenden 39 vorhanden sind, sind in diesem Ausführungsbeispiel als Noppen dargestellt, können jedoch auch die Form von Rippen, Rillen, Vertiefungen od. dgl. haben.

Sowohl Gefäßgriff 8 als auch Deckelgriff 14 bestehen aus Kunststoff oder einem anderen gering wärmeleitfähigen Material.

### Bezugszeichenliste:

- 2: Kochgefäß
- 3: Kapselboden
- 4: Schüttrand
- 5: Bodenplatte
- 6: Gefäßwandung
- 8: Gefäßgriff
- 10: Gefäßkörper
- 12: Deckel
- 13: Deckelrand
- 14: Deckelgriff
- 15: Austrittsöffnungsbereich
- 16: Randabschnitt
- 17: Umfangsbereich
- 18: Umfangsbereich
- 19: Umfangsbereich
- 20: Schräge
- 21: Schräge
- 22: Umfangsabschnitt
- 23: Umfangsabschnitt
- 24: Aufwölbung
- 26: Entlüftungsöffnung
- 27: Aufwölbung
- 28: Ausbuchtungen
- 30: Griffabschnitt
- 32: Steck-Schnapp-Verbindung
- 34: Federelement
- 36: Ausnehmungen
- 38: Arretierungsvorsprünge
- 39: Befestigungsenden
- 40: Aussparungen
- 42: Oberflächenstrukturen
- 44: Griffmulde
- 46: Unterkante
- 48: Anlagefläche
- 50: Anlagefläche
- 52: Dichtung
- 54: Nut
- 55: Durchbrechung
- 56: Außenkanten
- 58: Außenumfangsrand
- 60: Kammern
- G: Gefäßachse
- M: Mittellinie
- W: Mittellinie

## Patentansprüche

1. Kochgefäß (2) zur Aufnahme von Kochgut mit einem am Gefäßkörper (10) umlaufenden nach außen abgewinkelten, im wesentlichen ebenen Schüttrand (4), wenigstens einem an der Gefäßwandung (6) befestigten Gefäßgriff (8) aus wärmeisolierendem Material, wie Kunststoff sowie mit einem auf den Schüttrand (4) mit einem im wesentlichen ebenen Deckelrand (13) schließend aufsetzbaren Deckel (12) mit wenigstens einem Deckelgriff (14) aus wärmeisolierendem Material, wie Kunststoff, wobei der Gefäßkörper (10) und der Deckel (12) eine Ausschütt- und/oder Lüftungseinrichtung bilden, dadurch gekennzeichnet, daß die Gefäßwandung (6) in wenigstens einem Umfangsbereich (18) ihres oberen Randabschnittes (16) unter Verkürzung des Schüttrandes (4) eine größere Schräge (20) als im übrigen Umfangsbereich (17) aufweist, daß der Deckelrand (13) in wenigstens einem Umfangsabschnitt (22) wenigstens eine bei entsprechender Deckeldrehstellung in radialer Richtung in den von der größeren Schräge (20) freigegebenen Austrittsöffnungsbereich (15) ragende Aufwölbung (24) aufweist, daß der übrige ohne größere Schräge (20) ausgestattete Umfangsbereich (17) der Gefäßwandung (6) eine mindestens so große zusammenhängende Umfangslänge aufweist, wie der die wenigstens eine Aufwölbung (24) aufweisende Umfangsabschnitt (22) des Deckels (12), daß der mindestens eine Gefäßgriff (8) um im wesentlichen 90° versetzt zur radialen Mittellinie (M) des die größere Schräger (20, 21) aufweisenden Umfangsbereiches (18, 19) der Gefäßwandung (6) an derselben angeordnet ist, daß der Deckelgriff (14) sich über den Deckel (12) erstreckend ausgebildet ist und seine Längserstreckung um einen Winkel von etwa 90° versetzt zur radialen Mittellinie (W) des die Abschüttaufwölbung (24) aufweisenden Umfangsabschnittes (22) des Deckelrandes (13) derart angeordnet ist, daß in Öffnungsdrehstellung des Deckels (12) relativ zu dem Gefäßkörper (10) der Deckelgriff (14) und der wenigstens eine Gefäßgriff (8) zueinander ausgerichtet sind und daß in Schließdrehstellung des Deckels (12) relativ zu dem Gefäßkörper (10) der Deckelgriff (14) um einen Winkel von etwa 90° versetzt zu dem wenigstens einen Gefäßgriff (8) liegt.

2. Kochgefäß nach Anspruch 1, dadurch gekennzeichnet, daß der mit größerer Schräge (20) ausgestattete Umfangsbereich (18) der Gefäßwandung (6) eine größere Umfangslänge hat als der die wenigstens eine Aufwölbung (24) aufweisende Umfangsabschnitt (22) des Deckels (12).

3. Kochgefäß nach Anspruch 2, dadurch gekennzeichnet, daß der mit größerer Schräge (20) ausgestattete Umfangsbereich (18) der Gefäßwandung (6) eine Umfangslänge von etwa 120° einnimmt und der die wenigstens eine Aufwölbung (24) aufweisende Umfangsabschnitt (22) des Deckels (12) eine Umfangslänge von etwa 60° einnimmt.

4. Kochgefäß nach einem der Ansprüche 1 bis 3, dadurch gekennzeichnet, daß die größere Schräge (20) um zwischen 20° und 40°, vorzugsweise um etwa 30° zur Gefäßachse (G) geneigt ist.

5. Kochgefäß nach einem der Ansprüche 1 bis 4, dadurch gekennzeichnet, daß die Gefäßwandung (6) in zwei im wesentlichen sich gegenüberliegenden Umfangsbereichen (18, 19) ihres oberen Randabschnittes (16) eine größere Schräge (20, 21) aufweist als im übrigen Umfangsbereich (17).

6. Kochgefäß nach einem der Ansprüche 1 bis 5, dadurch gekennzeichnet, daß der Deckel (12) wenigstens eine Entlüftungsöffnung (26) aufweist, welche vorzugsweise von einer Aufwölbung (27) des Deckelrandes (13) ausgebildet ist.

7. Kochgefäß nach Anspruch 6, dadurch gekennzeichnet, daß die Entlüftungsaufwölbung (27) in einem dem die Abschüttaufwölbung (24) aufweisenden Umfangsabschnitt (22) gegenüberliegenden Umfangsabschnitt (23) des Deckelrandes (13) vorgesehen ist.

8. Kochgefäß nach einem der Ansprüche 1 bis 7, dadurch gekennzeichnet, daß die radiale Erstreckung der Abschüttaufwölbung (24) und der Entlüftungsaufwölbung (26) geringer ist als die Breite des Deckelrandes (13) in dem ohne größere Schräger (20) ausgestatteten Umfangsbereich (17) der Gefäßwandung (6).

9. Kochgefäß nach einem der Ansprüche 6 bis 8, dadurch gekennzeichnet, daß die Umfangslänge des die Entlüftungsaufwölbung (27) aufweisenden Umfangsabschnitts (23) wesentlich geringer ist als diejenige des die Abschüttaufwölbung (24) aufweisenden Umfangsabschnittes (22).

10. Kochgefäß nach einem der Ansprüche 1 bis 9, dadurch gekennzeichnet, daß die Abschüttaufwölbung (24) in mehrere, vorzugsweise drei, Ausbuchtungen (28) unterteilt ist.

11. Kochgefäß nach einem der Ansprüche 1 bis 10, dadurch gekennzeichnet, daß der die größere Schräge (20, 21) aufweisende Umfangsbereich (18, 19) der Gefäßwandung (6), in Richtung der Gefäßachse (G) gesehen, eine im wesentlichen sichelförmige Gestalt hat.

12. Kochgefäß, nach einem der Ansprüche 1 bis 11, gekennzeichnet durch die Kombination wenigstens eines unmittelbar unterhalb des Schüttrandes (4) befestigten Gefäßgriffes (8) und wenigstens eines sich über einen wesentlichen Teil des Durchmessers des Deckels (12) erstreckenden Deckelgriffes (14).

13. Kochgefäß nach Anspruch 12, dadurch gekennzeichnet, daß der Deckelgriff (14) als leicht gewölbter Bügel mit - abgesehen von seinen Befestigungsenden (39) - Abstand von der Oberseite des Deckels (12) verlaufend ausgebildet ist.

14. Kochgefäß nach Anspruch 12 oder 13, dadurch gekennzeichnet, daß der Deckelgriff (14) mittels einer Steck-Schnapp-Verbindung (32) befestigt ist, wobei die Steck-Schnapp-Verbindung (32) durch ein z.B. als Federclip ausgebildetes Federelement (34) und durch von mindestens einem Arretierungsvorsprung (38) begrenzten und in den Befestigungsenden (39) des Deckelsgriffs (14) vorgesehenen Ausnehmungen (36) gebildet ist.

15. Kochgefäß nach einem der Ansprüche 12 bis 14, dadurch gekennzeichnet, daß der Deckelgriff (14) mit dem Deckel (12) verklebt ist.

16. Kochgefäß nach einem der Ansprüche 12 bis 15, dadurch gekennzeichnet, daß der Gefäßgriff (8) eine an die Gefäßwandung (6) und die Unterkante (46) des Schüttrandes (4) angepaßte Anlagefläche (48, 50) aufweist.

17. Kochgefäß nach einem der Ansprüche 12 bis 16, dadurch gekennzeichnet, daß zwischen der Anlagefläche (48, 50) des Gefäßgriffes (8) und der Gefäßwandung (6) und/oder der Unterkante (46) des Schüttrandes (4) eine Dichtung (52) angeordnet ist.

18. Kochgefäß nach einem der Ansprüche 12 bis 17, dadurch gekennzeichnet, daß der Gefäßgriff (8) vorzugsweise mittels einer einzigen Schraube vorzugsweise unter etwa 45° zur Gefäßwandung (6) mit derselben verschraubt ist, wobei die die eine Schraube aufnehmende Durchbrechung (55) des Gefäßgriffes (8) etwa mittig im Gefäßgriff (8) angeordnet ist.

19. Kochgefäß nach einem der Ansprüche 12 bis 18, dadurch gekennzeichnet, daß der Außenumfangsrand (58) des Gefäßgriffes (8) im wesentlichen parallel zur Gefäßwandung (6) und die stirnseitigen Außenkanten (56) des Gefäßgriffes (8) im wesentlichen radial verlaufen.

20. Kochgefäß nach einem der Ansprüche 12 bis 19, dadurch gekennzeichnet, daß der Deckelgriff (14) jedenfalls im Bereich seiner Befestigungsenden (39) und/oder der wenigstens eine Gefäßgriff (8) auf ihrer/seiner Oberfläche z.B. mittels Rippen, Rillen, Noppen, Vertiefungen o. dgl. strukturiert sind/ist.

21. Kochgefäß nach einem der Ansprüche 12 bis 20, dadurch gekennzeichnet, daß der Deckelgriff (14) in seinem Griffabschnitt (30) eine seitliche Griffmulde (44) aufweist und zu seinen Befestigungsenden (39) hin verbreitert ist.

## Claims

1. Cooking vessel (2) for accommodating cooking material, having a substantially flat delivery edge (4) around the vessel body (10) and bent to the outside, at least one vessel handle (8) fastened to the vessel wall (6) and comprising heat-insulating material such as plastics, and having a lid (12) which can be attached to the delivery edge (4) in a closing manner with a substantially flat lid edge (13) and has at least one lid handle (14) comprising heat-insulating material such as plastics, with the vessel body (10) and the lid (12) forming an emptying and/or ventilating arrangement, characterized in that the vessel wall (6) in at least one circumferential region (18) of its upper edge section (16) has, with the shortening of the delivery edge (4), a greater sloping surface (20) than in the other circumferential region (17), in that the lid edge (13) in at least one circumferential section (22) has at least one arch (24) projecting, with appropriate lid rotary position in the radial direction, into the outlet region (15) freed by the greater sloping surface (20), in that the other circumferential region (17) of the vessel wall (6) not equipped with the greater sloping surface (20) has a continuous circumferential length which is at least as large as the circumferential section (22) of the lid (12) having the at least one arch (24), in that the at least one vessel handle (8) is arranged on the vessel wall (6) substantially offset by 90° to the radial centre line (M) of the circumferential region (18, 19) of the vessel wall (6) having the greater sloping surfaces (20, 21), in that the lid handle (14) is constructed so as to extend over the lid (12) and its longitudinal extent is staggered by an angle of about 90° to the radial centre line (W) of the circumferential section (22) of the lid edge (13) having the draining arch (24) in such a way that in the opening rotary position of the lid (12) relative to the vessel body (10) the lid handle (14) and the at least one vessel handle (8) are aligned with respect to one another and in that in the closing rotary position of the lid (12) relative to the vessel body (10) the lid handle (14) lies offset by an angle of about 90° to the at least one vessel handle (8).

2. Cooking vessel according to claim 1, characterized in that the circumferential region (18) of the vessel wall (6) equipped with the greater sloping surface (20) has a greater circumferential length than the circumferential section (22) of the lid (12) having the at least one arch (24).

3. Cooking vessel according to claim 2, characterized in that the circumferential region (18) of the vessel wall (6) equipped with the greater sloping surface (20) occupies a circumferential length of about 120° and the circumferential section (22) of the lid (12) having the at least one arch (24) occupies a circumferential length of about 60°.

4. Cooking vessel according to one of claims 1 to 3, characterized in that the greater sloping surface (20) is inclined by between 20° and 40°, preferably by about 30°, to the vessel axis (G).

5. Cooking vessel according to one of claims 1 to 4, characterized in that the vessel wall (6) has in two substantially opposing circumferential regions (18, 19) of its upper edge section (16) a greater sloping surface (20, 21) than in the other circumferential region (17).

6. Cooking vessel according to one of claims 1 to 5, characterized in that the lid (12) has at least one ventilation opening (26) which is preferably formed by an arch (27) of the lid edge (13).

7. Cooking vessel according to claim 6, characterized in that the ventilation arch (27) is provided in a circumferential section (23) of the lid edge (13) lying opposite the circumferential section (22) having the draining arch (24).

8. Cooking vessel according to one of claims 1 to 7, characterized in that the radial extent of the draining arch (24) and the ventilation arch (26) is less than the width of the lid edge (13) in the circumferential region (17) of the vessel wall (6) not equipped with the greater sloping surface (20).

9. Cooking vessel according to one of claims 6 to 8, characterized in that the circumferential length of the circumferential section (23) having the ventilation arch (27) is substantially smaller than that of the circumferential section (22) having the draining arch (24).

10. Cooking vessel according to one of claims 1 to 9, characterized in that the draining arch (24) is divided into several, preferably three, indentations (28).

11. Cooking vessel according to one of claims 1 to 10, characterized in that the circumferential region (18, 19) of the vessel wall (6) having the greater sloping surface (20, 21) has a substantially sickle-shaped form, seen in the direction of the vessel axis (G).

12. Cooking vessel according to one of claims 1 to 11, characterized by the combination of at least one vessel handle (8) fastened directly beneath the delivery edge (4) and at least one lid handle (14) extending over a substantial part of the diameter of the lid (12).

13. Cooking vessel according to claim 12, characterized in that the lid handle (14) is constructed as a slightly arched bar extending with clearance from the upper side of the lid (12) apart from its fastening ends (39).

14. Cooking vessel according to claim 12 or 13, characterized in that the lid handle (14) is fastened by means of a plug-and-snap-type connection (32), with the plug-and-snap-type connection (32) being formed by a spring element (34) constructed, for example, as a spring clip, and by recesses (36) limited by at least one arresting projection (38) and provided in the fastening ends (39) of the lid handle (14).

15. Cooking vessel according to one of claims 12 to 14, characterized in that the lid handle (14) is affixed to the lid (12).

16. Cooking vessel according to one of claims 12 to 15, characterized in that the vessel handle (8) has a contact surface (48, 50) adapted to the vessel wall (6) and the lower edge (46) of the delivery edge (4).

17. Cooking vessel according to one of claims 12 to 16, characterized in that a seal (52) is arranged between the contact surface (48, 50) of the vessel handle (8) and the vessel wall (6) and/or the lower edge (46) of the delivery edge (4).

18. Cooking vessel according to one of claims 12 to 17, characterized in that the vessel handle (8) is screwed preferably by means of a single screw preferably at about 45° to the vessel wall (6) to the same, with the opening (55) of the vessel handle (8) accommodating the one screw being arranged approximately centrally in the vessel handle (8).

19. Cooking vessel according to one of claims 12 to 18, characterized in that the outer circumferential edge (58) of the vessel handle (8) extends substantially parallel to the vessel wall (6) and the front outer edges (56) of the vessel handle (8) extend substantially radially.

20. Cooking vessel according to one of claims 12 to 19, characterized in that the lid handle (14) is definitely structured in the region of its fastening ends (39) for example by means of ribs, grooves, knubs, indentations or suchlike and/or the at least one vessel handle (8) is structured on its surface for example by means of ribs, grooves, knubs, indentations or suchlike.

21. Cooking vessel according to one of claims 12 to 20, characterized in that the lid handle (14) has in its handle section (30) a lateral recessed grip (44) and is widened towards its fastening ends (39).

## Revendications

1. Récipient de cuisson (2) destiné à recevoir un produit à cuire, comportant sur le corps (10) de récipient un bord verseur (4) circulaire sensiblement plan qui est plié en direction de l'extérieur, au moins une poignée (8) de récipient qui est fixée sur la paroi (6) du récipient et est réalisée en un matériau thermiquement isolant, tel qu'une matière synthétique et un couvercle (12) qui par un bord (13) de couvercle sensiblement plan peut être posé sur le bord verseur (4) à des fins de fermeture du récipient et comporte au moins une poignée (14) de couvercle en un matériau thermiquement isolant, tel qu'une matière synthétique, le corps (10) de récipient et le couvercle (12) formant un dispositif verseur et/ou d'évacuation de la vapeur, caractérisé par le fait que la paroi (6) du récipient, dans au moins une zone de circonférence (18) de sa partie (16) supérieure proche du bord, présente une partie (20) avec une inclinaison plus forte que dans la zone de circonférence (17) restante, laquelle partie d'inclinaison plus forte diminue la longueur du bord verseur (4), par le fait que le bord (13) du couvercle, dans au moins une portion de circonférence (22) présente un bombement (24) qui, lorsque le couvercle occupe la position angulaire correspondante, fait saillie dans la direction radiale dans l'orifice (15) de sortie ménagé par la partie (20) d'inclinaison plus forte, par le fait que la zone de circonférence (17) restante de la paroi (6) de récipient qui ne comporte pas d'inclinaison plus forte a une étendue continue dans la direction circonférencielle qui est au moins égale à celle de la portion de circonférence (22) du couvercle (12) qui comporte le bombement (24) au nombre d'au moins un, par le fait que la poignée (8) de récipient au nombre d'au moins une est disposée sur la paroi (6) du récipient et est décalée sensiblement de 90° par rapport à l'axe médian (M) radial de la zone de circonférence (19) de ladite paroi (6) de récipient qui présente une partie d'inclinaison (20, 21) plus forte, par le fait que la poignée (14) s'étend sur le couvercle (12) et que sa dimension longitudinale est décalée d'un angle de 90° environ par rapport à l'axe médian (W) radial de la portion de circonférence (22) du bord de couvercle (13) présentant le bombement (24), de manière telle que, lorsque le couvercle (12) est en position d'ouverture par rapport au corps (10) de récipient, la poignée (14) de couvercle et la poignée (8) de récipient au nombre d'au moins une sont mutuellement alignées et par le fait qu'en position de fermeture du couvercle (12) sur le corps (10) du récipient, la poignée (14) du couvercle est décalée d'un angle de 90° environ par rapport à la poignée (8) de récipient au nombre d'au moins une.

2. Récipient de cuisson selon la revendication 1, caractérisé par le fait que la zone de circonférence (18) de la paroi (6) de récipient pourvue d'une partie d'inclinaison (20) plus forte a une étendue dans la direction circonférencielle plus importante que la portion de circonférence (22) du couvercle (12) présentant le bombement (24) au nombre d'au moins un.

3. Récipient de cuisson selon la revendication 2, caractérisé par le fait que la zone de circonférence (18) de la paroi (6) de récipient pourvue d'une partie d'inclinaison (20) plus forte a une étendue dans la direction circonférencielle d'environ 120° et que la portion de circonférence (22) du couvercle (12) présentant le bombement (24) au nombre d'au moins un a une étendue dans la direction circonférencielle de 60° environ.

4. Récipient de cuisson selon l'une des revendications 1 à 3, caractérisé par le fut que l'ange d'inclinaison par rapport à l'axe (G) du récipient de la partie d'inclinaison (20) plus forte est compris entre 20° et 40°, et de préférence est d'environ 30°.

5. Récipient de cuisson selon l'une des revendications 1 à 4, caractérisé par le fait que la paroi (6) de récipient, dans deux zones de circonférence (18, 19) de sa partie (16) supérieure proche du bord situées sensiblement en vis-à-vis, présente une partie d'inclinaison (20, 21) plus forte que dans la zone de circonférence (17) restante.

6. Récipient de cuisson selon l'une des revendications 1 à 5, caractérisé par le fait que le couvercle (12) présente au moins un orifice (26) d'évacuation de la vapeur qui, de préférence, est constitué par un bombement (27) du bord de couvercle (13).

7. Récipient de cuisson selon la revendication 6, caractérisé par le fait que le bombement (27) d'évacuation de la vapeur est prévu dans une portion de circonférence (23) du bord de couvercle (13) située en vis-à-vis de la portion de circonférence (22) qui comporte le bombement verseur (24).

8. Récipient de cuisson selon l'une des revendications 1 à 7, caractérisé par le fait que l'étendue dans la direction radiale du bombement verseur (24) et du bombement (26) d'évacuation de la vapeur est inférieure à la largeur du bord de couvercle (13) dans la zone de circonférence (17) de la paroi (6) de récipient ne comportant pas de partie d'inclinaison (20) plus forte.

9. Récipient de cuisson selon l'une des revendications 6 à 8, caractérisé par le fait que l'étendue dans la direction circonférencielle de la portion de circonférence (23) contenant le bombement (27) d'évacuation de la vapeur est sensiblement inférieure à l'étendue dans la direction circonférencielle de la portion de circonférence (22) contenant le bombement verseur (24).

10. Récipient de cuisson selon l'une des revendications 1 à 9, caractérisé par le fait que le bombement verseur (24) est divisé en plusieurs cavités (28) de préférence en trois cavités.

11. Récipient de cuisson selon l'une des revendications 1 à 10, caractérisé par le fait que la zone de circonférence (18, 19) de la paroi (6) du récipient contenant la partie d'inclinaison (20, 21) plus forte, vue dans la direction de l'axe (G) du récipient, a sensiblement une forme de croissant.

12. Récipient de cuisson selon l'une des revendications 1 à 11, caractérisé par la combinaison d'au moins une poignée (8) de récipient fixée au-dessous du bord verseur (4) et d'au moins une poignée (14) de couvercle qui s'étend sur une partie importante du diamètre du couvercle (12).

13. Récipient de cuisson selon la revendication 12, caractérisé par le fait que la poignée (14) de couvercle est agencée sous la forme d'un étrier faiblement arqué qui - à l'exception de ses extrémités de fixation (39) - est disposé à distance de la face supérieure du couvercle (12).

14. Récipient de cuisson selon la revendication 12 ou la revendication 13, caractérisé par le fait que la poignée (14) de couvercle est fixée par un moyen de fixation à encliquetage (32), le moyen de fixation à encliquetage (32) étant constitué par un élément élastique (34) qui se présente par exemple sous la forme d'un anneau élastique et par des évidements (36) qui sont ménagés dans les extrémités de fixation (39) de la poignée (14) de couvercle et sont limités par au moins une saillie de retenue (38).

15. Récipient de cuisson selon l'une des revendications 12 à 14, caractérisé par le fait que la poignée (14) de couvercle est collée sur le couvercle (12).

16. Récipient de cuisson selon l'une des revendications 12 à 15, caractérisé par le fait que la poignée (8) de récipient présente une surface d'appui (48, 50) adaptée à la paroi (6) de récipient et à la face inférieure (46) du bord verseur (4).

17. Récipient de cuisson selon l'une des revendications 12 à 16, caractérisé par le fait qu'un joint (52) est disposé entre la surface d'appui (48, 50) de la poignée (8) de récipient et la paroi (6) de récipient et/ou la face inférieure (46) du bord verseur (4).

18. Récipient de cuisson selon l'une des revendications 12 à 17, caractérisé par le fait que la poignée (8) de récipient est fixée sur la paroi (6) de récipient de préférence au moyen d'une vis unique disposée à 45° environ par rapport à ladite paroi de récipient, le passage (55) dans la poignée (8) qui reçoit ladite vis étant disposé sensiblement au milieu de la poignée (8).

19. Récipient de cuisson selon l'une des revendications 12 à 18, caractérisé par le fait que le bord périphérique (58) extérieur de la poignée (8) de récipient est sensiblement parallèle à la paroi (6) de récipient et que les bords extérieurs (56) frontaux de la poignée (8) de récipient sont sensiblement radiaux.

20. Récipient de cuisson selon l'une des revendications 12 à 19, caractérisé par le fait que la poignée (14) de couvercle, tout au moins dans la région de ses extrémités de fixation (39) et/ou la poignée (8) de récipient au nombre d'au moins une, au niveau de sa/leurs surface(s) présente(nt) un motif en relief par exemple des stries, des nervures, des boutons, des creux ou similaires.

21. Récipient de cuisson selon l'une des revendications 12 à 20, caractérisé par le fait que la poignée (14) de couvercle, dans sa partie (30) de préhension, comporte une cavité (44) de préhension et s'élargit en direction de ses extrémités de fixation (39.
